# EUROPEAN PATENT SPECIFICATION

(11) **EP 0 300 506 B1**
(45) Date of publication and mention of the grant of the patent: **14.06.1995**
(21) Application number: 88111949.9
(22) Date of filing: 21.06.1984
(51) Int. Cl.: F28F 25/08, B01D 53/18, F28C 1/02

(54) **Tower packing from corrugated metal sheets**
Füllkörper aus gefalteten Metallplatten
Garniture en tôles metalliques pliées

(30) Priority: 21.06.1983 US 506417; 21.06.1983 US 506534
(43) Date of publication of application: 25.01.1989
(62) Divisional of application: 84304202.9
(73) Proprietor: GLITSCH, INC., Dallas Texas 75212 (US)
(72) Inventor: Chen, Gilbert, Farmers Branch Texas 75234 (US); Kitterman, B. Layton, Dallas Texas 75248 (US); Glaspie, Donald L., Dallas Texas 75229 (US); Axe, John R., Arlington Texas 76012 (US)
(74) Representative: Hitchcock, Esmond Antony

(56) References cited:
- EP-A- 0 072 875
- EP-A- 0 158 917
- DE-A- 1 913 016
- DE-A- 2 032 292
- DE-A- 3 048 303
- DE-B- 1 283 250
- FR-A- 1 193 405
- FR-A- 2 086 365
- FR-A- 2 134 377
- FR-A- 2 301 284
- FR-A- 2 338 065
- GB-A- 2 097 282

## Description

The present invention relates to tower packing of the type comprising a plurality of corrugated metal sheets in face-to-face relationship with opposed corrugations angled oppositely one to the other and arranged for receiving a descending liquid flow concomitantly with an ascending vapour flow to bring about vapour-liquid contact therebetween for mass and/or heat transfer, said sheets having a plurality of relatively large spaced apart apertures formed therein for effecting the flow of vapour and liquid therealong. Such tower packing material is described in EP-A-0 130 745.

EP-A-0 130 745 includes discussion of previously known vapour-liquid process towers, and tower packing used therein. Particularly, it acknowledges the widespread established practice of using passive vapour-liquid contact devices with sheets of material in face-to-face engagement in such process towers.

Reference is also directed to DE-A-1 913 016; 2 032 292; and 3 048 303. Each of these specifications discloses tower packing broadly of the type described above with corrugated metal sheets in face to face contact. In ′016 the corrugations are inclined laterally in opposite directions; with apertures in the form of openings extending over the crests of the corrugations. In ′292 the packing described has sheets in strip form with their corrugations inclined alternately in opposite directions relative to a vertical plane. In this case also, the apertures take the form of openings which will normally extend over the crests of the corrugations.

The present invention is directed at contact devices of the above type and in which a tower packing grid comprises a plurality of corrugated metal sheets in face-to-face relationship with opposed corrugations angled oppositely one to the other and arranged for receiving a descending liquid flow concomitantly with an ascending vapour flow to bring about vapour-liquid contact therebetween for mass and/or heat transfer, said sheets having a plurality of relatively large spaced apart apertures formed therein for effecting the flow of vapour and liquid therealong. According to the invention, the sheets include a plurality of spaced apart elongate slits said slits being spaced longitudinally from one another in parallel rows with the longitudinal axes of said slits extending transversely across said corrugations to distribute liquid across both sides of said sheets and provide lateral diversion and entrainment of liquid descending over said sheets to spread the liquid across the surface area of said sheets and produce enhanced vapour-liquid contact. Tower packing comprising sheets of expanded metal, but otherwise as set out above, are outside the scope of the present invention.

The following description, given by way of example, is primarily of tower packing components and structures in which the corrugated metal sheets of the packing are of expanded metal. As will be apparent however, the expanded metal sheets can be replaced with corrugated sheets of unexpanded metal as described. Reference is made to the accompanying drawings in which:
Fig. 1 is an exploded perspective view illustrating a plurality of corrugated expanded metal plates being assembled one against the other;
Fig. 1A is an exploded perspective view illustrating a plurality of corrugated plates having sandwiched therebetween apertured lamella defining the interstitial notional plane;
Fig. 2 is a perspective view of the vapor-liquid contact grid assembly illustrated in Fig. 1 in an assembled configuration;
Fig. 2A is a perspective view of the vapor-liquid contact grid assembly illustrated in Fig. 1A in an assembled configuration;
Fig. 3 is an enlarged top plan view of the vapor-liquid contact grid of Fig. 2;
Fig. 3A is an enlarged top plan view of the vapor-liquid contact grid of Fig. 2A;
Fig. 4 is a side-elevational, cross-sectional view of a process tower having installed therein a plurality of grid layers constructed of the corrugated contact plate and illustrating a plurality of rectangular flow apertures formed therethrough;
Fig. 5 is a top plan, cross-sectional view of the process tower of Fig. 4 taken along lines 5-5 thereof;
Fig. 6 is an enlarged fragmentary, front elevational view of an expanded metal lattice illustrating the interrelated flow network therein;
Fig. 7 is an enlarged, fragmentary front-elevational view of an alternative embodiment of the expanded metal lattice of Fig. 6;
Fig. 8 is a side-elevational, cross-sectional, fragmentary view of a portion of the expanded metal lattice of Fig. 7 illustrating the laminate construction thereof.
Fig. 9 through Fig. 17 are alternative embodiments of sidewall flow apertures formed in the sidewall of an expanded metal plate and/or lamella adapted for imparting turbulence to the vapor-liquid flow passing thereover;
Fig. 18 is a top plan view of a material blank adapted for forming the corrugated plate and being constructed with a plurality of staggered slits;
Fig. 19 is a perspective view of an alternative embodiment of the expanded metal corrugated plate comprising a non-expanded slitted metal blank.

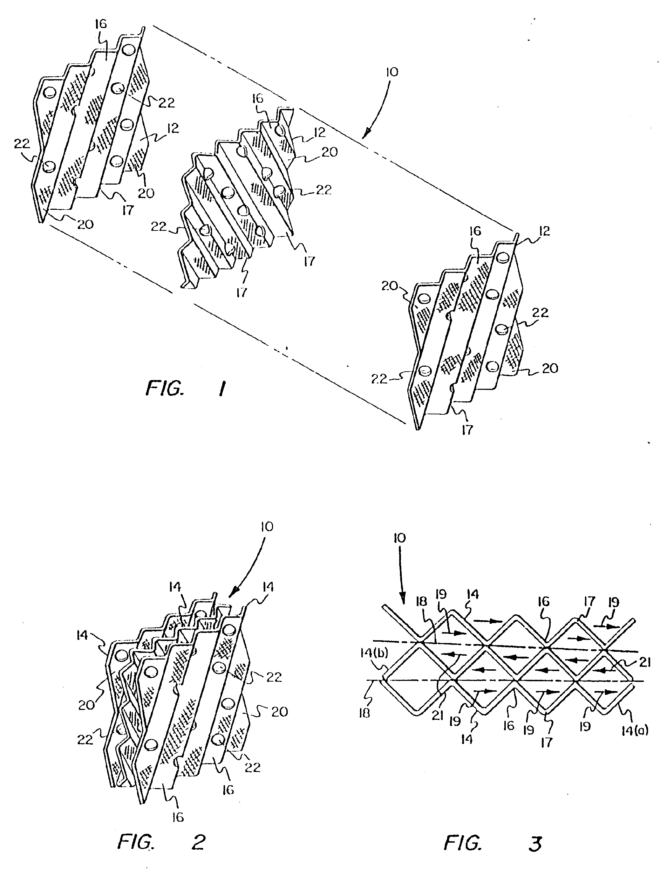

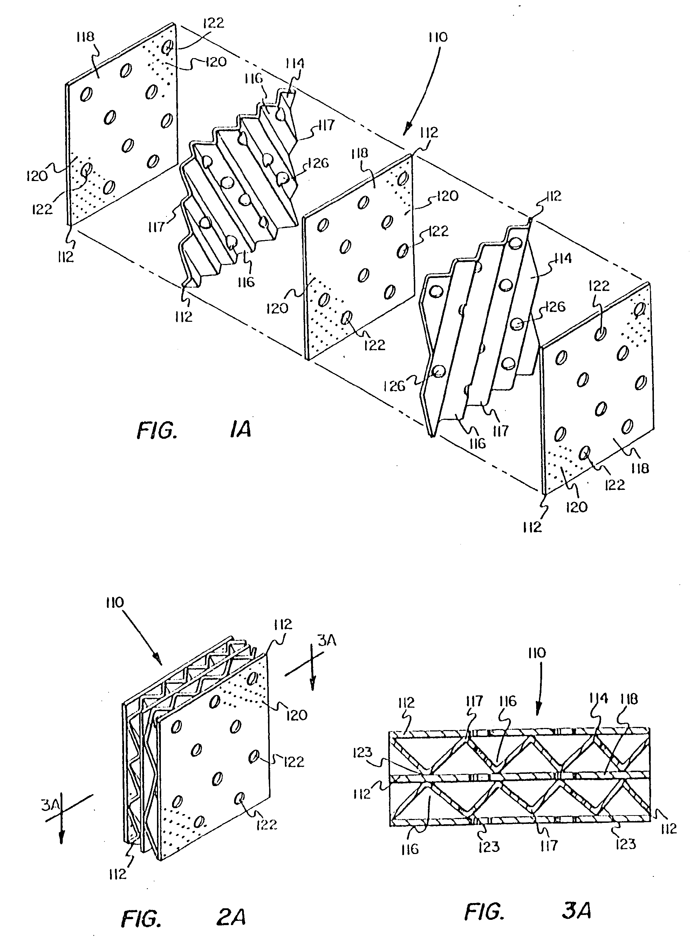

Referring first to Fig. 1 there is shown an exploded perspective view of a series of expanded metal plates of a packing element assembly. The assembly 10 comprises a plurality of expanded plate members 12 stacked in contiguous face-to-face relationship, between which vapor and liquid are subject to countercurrent flow for imparting mass and heat transfer therebetween. The manner in which the vapor and liquid flow is directed between the respective plates directly affects the vapor liquid contact, the efficiency of the operation.

The plates 12 of assembly 10 include corrugations 14 having a plurality of flow troughs or channels 16 defined between the respective corrugations crests or ridges 17 disposed thereacross in generally parallel, spaced relationship. The corrugated members 14 are positioned in face-to-face relationship one with the other with adjacent sheets preferably angulated relative to one another. In this manner vapor ascending through the stacked grid assembly 10 and passing through the corrugation channels 16 are exposed to the curved or folded sidewall surface areas of the corrugated plates 14.

Still referring the Fig. 1, the expanded metal corrugated sheets 14 illustrated therein comprises a plurality of expanded metal apertures 20 for creating a complex pattern of vapor and liquid flow over and through the sheet 14 and adjacent corrugation ridges 17. In this manner vapor ascending through the stacked grid assembly 10 and passing through the corrugation channels 16 may be exposed concurrently to the angled sidewall surface areas of the corrugated lamella 14 as well as the intermediate sidewall areas of the apertures 20. The notional plane between adjacent corrugated plates 14 may also include a lamella for further fluid transfer as set forth in FIG. 1A described below.

Still referring to the embodiment of Fig. 1, the corrugated sheet 14 illustrated therein further includes a series of relatively large orifices 22. The orifices 22 afford venting between adjacent corrugations channels 16 for vapor pressure equalization and liquid flow diversion. Such vapor pressure considerations are important for establishing a homogeneous flow through the grid assembly 10 under tower operating conditions, to be defined in more detail below. Liquid descending through the grid assembly 10 is optimally spread across the material surface area including the sidewalls of the corrugation channels 16. The liquid entrained within the apertures 20 then comprise a relatively thin liquid volume enhancing exposure and vaporization to the passing vapor flow. This effect maximizes efficiency of the grid operation.

Referring now to Fig. 2 there is shown a perspective view of the grid 10 of Fig. 1 in an assembled configuration. The grid 10 shown herein comprises only a portion of a grid layer for use in a process tower as will be described in more detail below. It may be seen that the adjacent corrugated plate members 14 are stacked against one another in engagement across the corrugation edge portions 12. A plurality of flow channels 16 are thus formed in the grid 10, which channels 16 are relatively open across the notional plane between contiguous members 14. As shown herein, opposite ones of the corrugated plate members 14 are oriented oppositely, one to the other, for providing an opposed flow of vapor and liquid across the intermediately disposed plates.

Referring now to Fig. 3, there is shown a top plan view of the assembled grid section 10 of Fig. 2. It may be seen that a notional plane 18, shown in phantom lines, separates the adjacent corrugated plates 14. Vapor flowing in the respective channels 16 of each plate 14 passes upwardly and at the angle of the corrugation ridges 17. Because contiguous plates 14 are angled oppositely, one to the other, (as shown in Fig. 1), the direction of upward vapor flow of said contiguous plates is laterally opposite. Flow arrows 19 and 21 illustrate this point. Lamella 14(a) imparts a lateral flow to the right as viewed in Fig. 3, while lamella 14(b) imparts a lateral flow to the left. Since the notional plane 18 is open between said lamella, both advantageous and disadvantageous flow results can arise. One solution to such flow problems is set forth in FIGS. 1A, 2A, and 3A wherein an intermediate lamella is placed across the notional plane 18. The sheet across the notional plane affords defined fluid flow and fluid sheeting along both sides of the plate. It may also be seen that the area of fluid flow along the notional plane comprises the greatest single wall area defined by a corrugated section 15. This condition holds true for all corrugated wall sections 14 formed with an angle of 60° or less. For corrugations 16 formed at an angle greater than 60°, the sheet disposed across the notional plane would be of less size than the "V"-shaped corrugation sidewalls. However, such a corrugation angle is not frequently incorporated due to the increase in material cost weight and altered process characteristics within a column.

Referring now to FIG. 1A there is shown an exploded perspective view of sections of the intermediate lamella contact plate assembly referred to above. The assembly 110 comprises a plurality of plate members 112 formed from stainless steel, or the like, either smooth, perforated, or textured lamella 114, stacked in contiguous face-to-face relationship. Vapor and liquid are induced to flow in opposite directions along and between the plates 114 for effecting mass and heat transfer therebetween. The manner in which the vapor and liquid flow is directed between the respective plates and along the notional plane therebetween directly affects the vapor liquid contact, the efficiency of the operation, and forms the subject of one aspect of the present invention.

The plates of assembly 110 include crimped or corrugated members 114 having a plurality of flow channels 116 defined within the respective corrugation ridges 117 disposed thereacross and in generally parallel, spaced relationship. The corrugated plates 114 are positioned in face-to-face relationship, one to the other with a lamella 118 disposed therebetween. The lamella, or sheet 118, disposed between contiguous plates 114 is in contact with adjacent corrugation ridges 117 of respective plates 114. The sheet 118 further includes a slitted, pierced, or textured surface, which in FIG. 1A, includes a plurality of fluid apertures 120 affording patterns of vapor and liquid passages through the sandwiched lamella 118 and adjacent corrugation ridges 117. It should be noted, however, that the apertures 120 could be replaced with bumps or detents. In this manner vapor ascending through the stacked grid assembly 110 and passing through the corrugation channels 116 may be exposed concurrently to the angled sidewall surface areas of the corrugated lamella 114 and to the generally planar, fluid receptive, surface of the intermediate sheet 118. The notional plane between adjacent corrugated plates 114 thus serves as a fluid transfer surface. The apertures 120 formed within the sheet 118 then traps, diverts and, in some embodiments, establish a plurality of thin menisci of liquid during descending fluid flow. The fluid upon the sheet 118 is then exposed on two sides to opposite vapor flow patterns to maximize the efficiency of the mass heat transfer with a minimum of pressure loss and energy input.

Still referring to the embodiment of FIG. 1A, the sheet 118 illustrated therein further includes a series of relatively large orifices 122. The orifices 122 are necessary elements of the present lamella construction and afford venting and divert flow between adjacent corrugations channels 116 for vapor pressure equilization. Such vapor pressure considerations are important for preventing maldistribution of flow through the grid assembly 110 under certain tower operating conditions, to be defined in more detail below. Liquid descending through the grid assembly 110 is optimally spread across the material surface area including the sidewalls of the corrugation channels 116 and the generally planar surface area of the sandwiched lamella. The liquid entrained by the bumps or apertures 120 then comprise a relatively thin liquid volume enhancing exposure and vaporization to the passing vapor flow. This effect maximizes efficiency of the grid operation. The apertures 120 may also be presented in the form of slits, slots, or louvers as shown in FIG. 118 and described below. A plurality of larger apertures 126 are likewise formed within the corrugated plates 114 for concomitant vapor pressure equalization, flow diversion, and enhanced vapor-liquid contact as will be discussed in more detail below.

Referring now to FIG. 2A there is shown a perspective view of the grid 110 of FIG. 1A in an assembled, "sandwiched" configuration. The grid 110 shown herein comprises only a portion of a grid layer for use in a process tower such as that set forth in FIG. 2. It may be seen that the plates 118 separate the adjacent corrugated plate members 114 and are sandwiched therebetween in engagement with the corrugation edge portions 117. A plurality of discrete flow channels 116 are thus formed in the grid 110 as defined by the plate 118 and the contiguous corrugation edge 117. Without the insert plate 118, the corrugated region 116 would be open to the corrugation 116 of the facing plate 114 across the notional plane therebetween. The lamella 118 tangibly defines the notional plate and consequently provides a substantial surface for the flow of liquid thereacross. Opposite ones of the corrugated plate members 114 are oriented oppositely one to another for providing an opposed flow of vapor and liquid across the intermediately disposed plates.

Referring now to FIG. 3A there is shown a top plan view of the assembled grid section 110 of FIG. 2A. It may be seen that the lamella 118 discretely separates the adjacent corrugated plates 114. This separation across the notional plane affords defined fluid flow and fluid sheeting along both sides of the plate 118. It may be seen that the area of fluid flow along the notional plane comprises the greatest single wall area defined by a corrugated section 115 as stated above. This condition holds true for all corrugated wall sections 114 formed with an angle of 60° or less. For corrugations 116 formed at an angle greater than 60° the lamella 118 disposed across the notional plane would be of less size than the "V" shaped corrugation side walls. However such a corrugation angle is not frequently incorporated due to the increase in material cost weight and altered process characteristics within a column.

It has thus been found to be most desirable to incorporate corrugations having an angle of formation less than 60° for maximum efficiency in vapor liquid contact. In such configurations the lamella 118 disposed in the notional plane between adjacent corrugated plate members 114 provides not only the maximum wall surface area for each flow channel but further increases the number of connecting flow points within the grid assembly 110. For example, the sheet 118 is sandwiched between adjacent corrugated plates 114 so that the edges 117 of each engage the sheet continuously therealong. This continuous engagement strip affords an elongated series of contact points across which fluid flow can migrate and vapor-liquid contact can be enhanced. Moreover the inner section of the sheet and the corrugation edge 117 form a narrow elongated corner 123. The surface tension of liquid causes the descending fluid to form in the corners 123 along the plate intersections and thus establish a channel of flow that can continuously feed flow to other areas of the sheet 118 and corrugated plates 114. Such feed flow lines along both edges of the corrugation channel 116, as shown in FIG. 3A, is highly desirable and may be shown to be an effective way of providing homogeneous liquid flow throughout the grid 110.

Still referring to FIG. 3A, it may further be seen that the lamella 118 comprises a substantially planar, apertured surface area for the flow of liquid thereacross as compared to the substantially angled side wall regions of the corrugations 116. A more uniform liquid flow is thus provided across the sandwiched sheet than might otherwise be afforded across the curved and inclined walls of the corrugations. The uniform sheeting action of the flowing liquid is both programmable and a consistent flow aspect of the grid 110. such sheeting flow may also be characterized as laminar across substantial body portions thereof as compared to the flow across the inclined walls of the corrugated plates 114. Such flow may manifest itself in channeled flow areas of a non-homogeneous or laminar layer across the surface material of the corrugations. With a planar, apertured wall of the sandwiched sheet 118, the flow can both be predicted and programmed for maximum efficiency and vapor liquid contact.

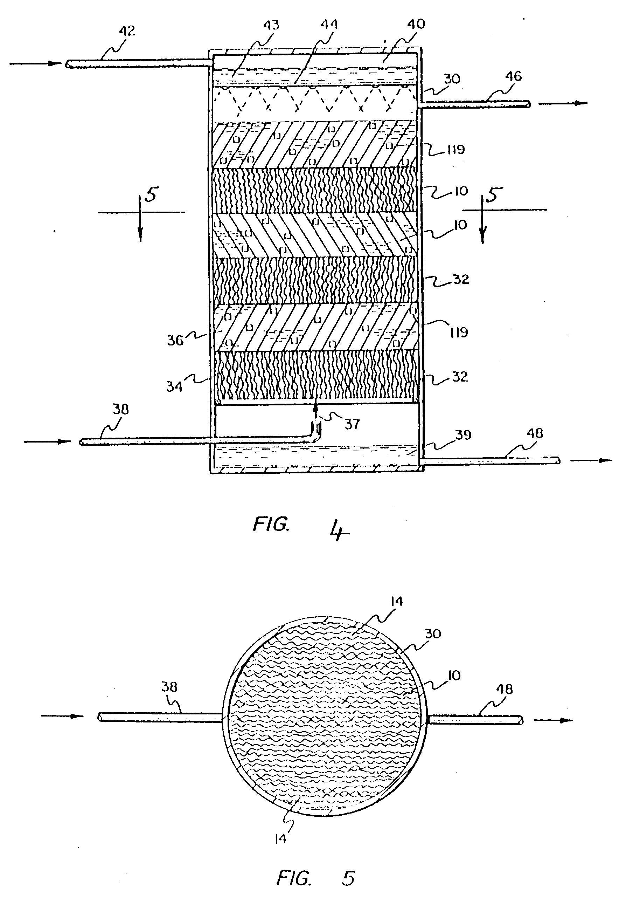

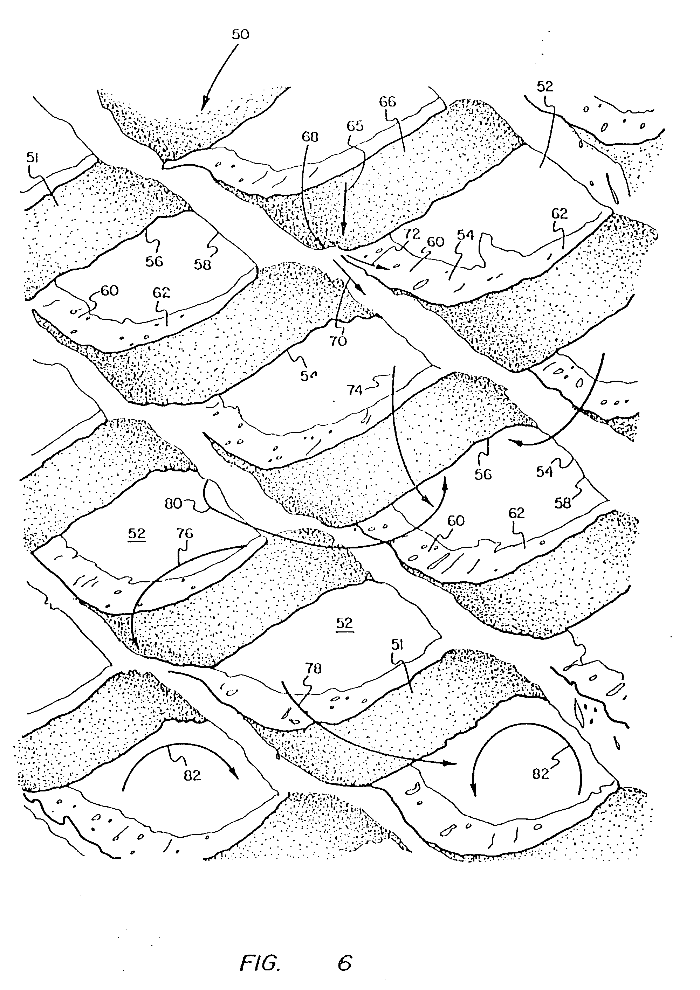

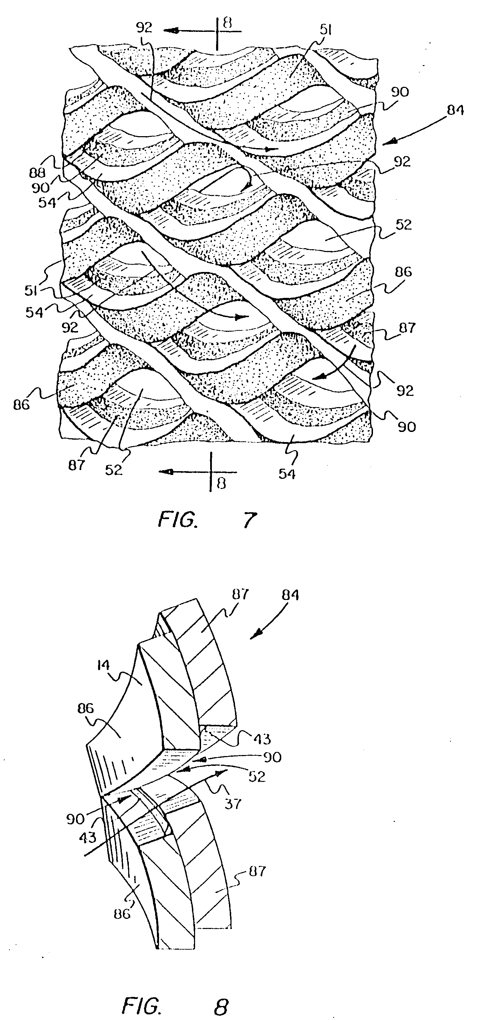

Referring now to Fig. 4, there is shown a side-elevational, cross-sectional view of a process column 30 having a stack 10 of grid layers 32, 34, 36. Grid layers 32 are comprised of a plurality of plate sections such as that shown in Figs. 2 and 3. The outer periphery of the multiple layers is contoured to fit within the process tower 30 which, in the present embodiment, is circular in cross-section. Adjacent grid layers 32 within the column are preferably oriented orthogonally one to the other to further enhance the vapor-liquid contact and turbulence of fluids passing therethrough.

Still referring to Fig. 4, a first grid layer 34 is thus shown adjacent a second, upper grid layer 36 oriented orthogonally to the first whereby the sheet perforations of the lower layer 34 are illustrated in contrast to the edge portions of the sheet 36 and plate members 14 of said upper grid layer. The column is constructed for affording the entry of vapor 37 through a lower vapor flow line 38 positioned near the bottom 39 of the column. The upper region 40 of the tower 30 is likewise fitted with a liquid flow line 42 for affording the ingress of the liquid 43 to be processed within said column. The liquid entry from the fluid flow line 42 is dispersed across the upper grid layers 32 by spray or dispension heads 44 to initiate homogeneous, descending liquid flow patterns across the stacked grids 10. Similarly, the vapor 37 is introduced in the lower regions 39 of the column for homogeneous distribution therearound and the ascension thereof through the stacked grid layers 32 for heat and/or mass transfer with the descending liquid 43. The vapor 37 is vented near the top of the column 30 through exhaust line 46 while the excess liquid 43 collected at the bottom of said column is permitted to drain through line 48. The technique of such column operation is well known in the prior art and is, for example, set forth and shown in U.S. Patent Nos. 3,959,419 and 3,969,447.

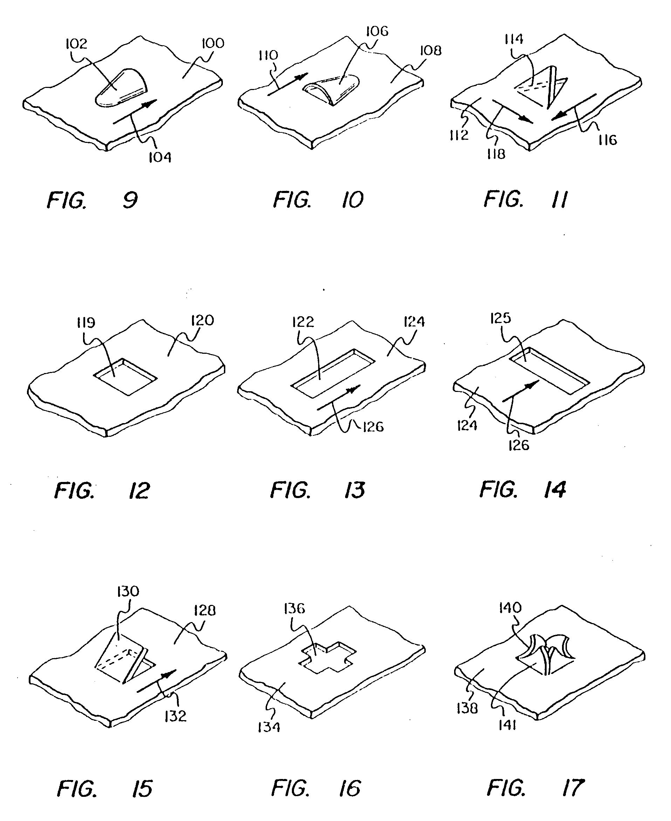

Referring now to Fig. 5, there is shown a top plan view of the column of Fig. 4 taken along line 5-5 thereof. The flow lines 38 and 48 are shown in conjunction with the assembled grid layers. The grid layer 32 is shown in cross-section and comprises a circular body having a plurality of stacked plates 14 and sheets 18 in face to face engagement thereacross. The construction and assembly considerations for conventional column packing grids and the operation thereof is a well known technology of the prior art.

Referring now to Fig. 6, there is shown an enlarged front elevational fragmentary view of one embodiment of the corrugated flow plate 14. The plate 14, formed of expanded metal is shown in a magnified view which illustrates the fluid flow patterns which occur thereacross. The expanded metal body, or lattice 50, is comprised of an interconnected series of twisted and deformed lands 51 defining generally rectangular apertures 52 therebetween. Each twisted land 51 is comprised of four elongated sidewall surfaces 54. The four surfaces 54 are bent and twisted during plate formation to afford an interconnected flow path of varying degrees of angulation and inclination relative to the vertical fluid flow. The twisted land portions are also capable of carrying fluid and vapor flow from one side of the corrugated plate 14 to the other during vapor fluid flow thereacross.

The sidewall surfaces 54 of the expanded metal lattice 50 each comprise a first upper face 56, a second lateral face 50, a first bottom side face 50, and a bottom face 62. The various surfaces 54 are shown most clearly in Fig. 6 and are generally rough and pitted due to the method of formation. The faces 56, 58, 60 and 62 are curved and twisted both into and away from the opposite sidewalls of the plate 14 whereby fluid flowing therealong is diverted onto various ones of the flow faces and, in some instances, transferred to the opposite side of the expanded lattice 50. Because the surface is made of metal, wetting is facilitated, and laminar fluid filming thereacross is enhanced by the twisted fluid flow path over the surfaces of each of the angled lands 51. The curved and jagged formation of land faces 56, 58, 60 and 62 further serves to disturb laminar vapor flow across the plate 14 for imparting turbulence thereto and exposing the descending liquid flow to the turbulent vapor for improved mixing.

Still referring to Fig. 6, there is shown a typical flow pattern designated by arrows 65 whereby the flow of descending liquid 43 may be viewed relative to the flow path of ascending vapor 37. A typical flow pattern of descending liquid 43 brings it down a first land 66 where it is separated along an interface 68 between side land 69, along arrow 70, and bottom face 60 along arrow 72. The liquid 43 flows in a film across both surfaces and may be carried to the opposite side of the lattice 50. This is one of a myriad of flow patterns. The fluid flowing along the lands 51 intersects and merges with the flow from adjacent lands 51 from the opposite side of the lattice 50, and from surfaces 54 of apertures 52. The flow patterns can thus form swirls of liquid flow as shown by arrows 74, 76, and 78. The swirls of arrows 74 and 78 indicate liquid circulating around lands 51, which flow is highly advantageous for effective vapor-liquid engagement.

Still referring to Fig. 6, the pitted and jagged metal surface areas are typical of expanded metal which is deformed beyond its point of elastic deformation to take a plastic set in the select expanded and corrugated configuration. The jagged edges may be seen to impart turbulence to both the countercurrent vapor and liquid flow patterns. In this manner, maximum heat-mass transfer through the vapor-liquid flow is effected. Vapor turbulence also effects the liquid flow and another flow pattern of circular liquid flow 80 around the lands of adjacent apertures 52 may be established. Circular liquid or vapor flow may also be created in the pattern of arrows 82 due to the turbulence and flow channeling features of the expanded metal lattice 50 which, in conjunction with its angulation relative to an adjacent corrugated lattice, affords directionality to the ascending vapor 37. This condition creates circulating vapor and/or liquid flow regions passing between adjacent apertures 52. Such circular flow comprises maximum turbulence and greatly facilitates mass transfer particularly in the condition of an "open" notional plane between adjacent plates 14. Vaporization of the descending liquid in any particular area is readily replenished from the convoluted, interconnected flow patterns afforded in the present invention. This aspect, in conjunction with the wetting parameters of the metal, greatly enhances the operational characteristics. Moreover, the expanded metal is capable of relieving residual stress during formation to reduce the propensity of corrosion often found in cold formed metal packing elements of conventional prior art designs. Residual stress is a known factor of corrosion when such metal bodies are exposed to many of the standard corrosive chemicals commonly utilized in fractionation processes in such stacking columns.

Referring now to Fig. 7, there is shown an alternative embodiment of an expanded metal corrugated lattice 50. Lattice 84 is constructed from a pair of expanded metal blanks 86 and 87 laminated one to the other whereby the sidewall configuration of the resulting apertures 52 includes an offset wall region 88 with an abutment channel 90 formed therearound. The channel 90 is comprised of the intersection of the sidewalls 54 and land 51 of the respective expanded metal laminants 86 and 87. The channel 90 traps liquid 43 flowing therearound through capillary action of the like. The entrained liquid 43 within the laminate wall region 90 affords numerous advantages in vapor-liquid contact by presenting a liquid surface integral with the expanded metal plate, which liquid is actually retained by capillary action. The corrugation formation of the plate 84 further deforms and offsets the wall region due to natural expansion properties. This deformation further enhances the entrapment channel configuration. Sheets of slitted or slotted metal expanded into the plate configuration shown herein will thus provide vastly improved liquid entrainment properties, which entrainment may be seen to be typical of the entire land region surrounding the expanded metal apertures 52. In this manner, a sheet of expanded metal, as set forth herein, may be seen to present a dual face of filmed over and entrapped liquid. The liquid exposure may be seen to be of a degree not heretofore possible. The amount of liquid entrainment is, in essence, a complete magnitude greater than conventional corrugated plates incorporating simple aperture formation for flow diversion. In this manner, the ascending vapor flow, countercurrent to the liquid flow, is literally channeled into turbulent flow patterns by the offset presence of the liquid 43 about the twisted lattice 4 comprising the expanded metal grid. This feature greatly promotes mass and heat interchange between the vapor and liquid.

Still referring to Fig. 7, it may be seen that the twisted lattice 84 likewise affords multiple flow paths for descending liquid. It may be seen again by way of arrows 92 illustrating the descending liquid flow that the fluid is likewise channeled into, through, and around the sidewalls and upper edges 54 of the various expanded lattice apertures 52. Vapor 37 is likewise diverted into the edges of the apertures 52 where liquid 43 is entrapped in the sidewall channels 90 of the adjacent laminates.

Referring now to Fig. 8, there is shown a fragmentary side elevational view of an enlarged aperture section 52 with upper and lower channels 90 clearly shown. Laminate plates 86 and 87 are offset, one to the other, from the expansion during formation. Liquid 43 is shown entrained within upper and lower channels 90. Vapor 37 passing over the plate 14 may even pass through the aperture 52 to contact the liquid entrainment therein. Even when vapor 37 does not pass through the aperture 52, the presence of entrained liquid 43 enhances the flow of descending liquid thereover and through the lattice 84 to effect the circular flow patterns discussed above. Such flow patterns and fluid presence are integral to maximum vapor-liquid contact efficiency.

Referring now to Figs. 9 through 17 collectively, there are shown various embodiments of the aperture and/or tab construction provided in the plates 14 or notional plane lamella 18. It should be understood that the plates or lamella shown in Figs. 9 through 17 may be constructed of either solid, smooth, textured, slitted configurations although solid configurations are shown in each of the drawings for purposes of clarity.

Addressing first the slotted configuration of Fig. 9, there is shown a plate section 100 having a tabbed aperture 102 formed therein and oriented to the direction of fluid flow shown by arrow 104. The tabbed aperture of Fig. 9 is comprised of a slitted and coined portion which protrudes outwardly in a semi-conical configuration for diverting the flow of vapor and liquid and imparting turbulence to the flow. Similarly, Fig. 10 is shown comprising a tabbed aperture 106 upon a lamella section 108 with the direction of fluid flow shown by arrow 110. It may be seen that fluid flowing in the direction 110 will be received into the tabbed aperture 106 and channeled therethrough into the opposite side of the lamella 108. Likewise, the various tabbed apertures shown herein may be provided upon either the corrugated plates 14 or upon the insert lamella 18. In these various tab structure configurations, the fluid flow parameters and operational characteristics may be selectively altered for precise flow characteristics and the particular constituents used within a process column 30. For this reason a variety of tabbed apertures are shown herein illustrating the varieties of fluid flow and turbulence which may be generated.

Referring now to Fig. 11 there is shown a plate 112 having a triangular, tabbed aperture 114 formed thereon. Fluid flow in the direction shown by arrow 116 will be received within the triangular tabbed aperture while flow laterally thereto, in the direction show by arrow 118, may be partially diverted and partially received within the aperture. Likewise Fig. 12 illustrates a generally square aperture formed without a tabular region within a plate 120. The square aperture 119 has various fluid flow diverting characteristics contrasting that of a circular aperture and that of a aperture having a tabbed region upstanding therefrom. Fig. 13 illustrates a rectangular aperture positioned longitudinally to the direction of flow. The rectangular aperture 122 formed upon plate 124 is oriented for diverting longitudinal flow as shown by arrow 126. In this configuration, flow is substantially diverted and that which proceeds into the aperture may be carried to the opposite side of the plate 124. The advantage of such cross fertilization from one side to the other side of the flow plates has been set forth above. Addressing now Fig. 14, the plate 124 is shown with a rectangular aperture 125 of equivalent size to that shown in Fig. 13 but oriented generally orthogonal thereto for imparting a substantially different fluid flow effect to a fluid flow propogating in the direction of arrow 126.

Referring now to Fig. 15 there is shown a plate 128 having a generally rectangular tabbed aperture 130 formed therein. Fluid flowing in a first direction 132 may be seen to be diverted substantially by said tabbed aperture 130 as shown in Fig. 11. However, again the fluid diverting affects are considered in conjunction with the fluid circulating effects for fluid received through the aperture into the opposite side of the plate 128.

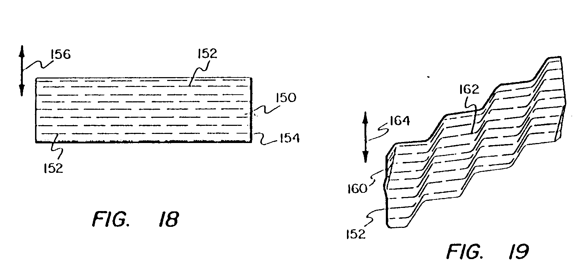

Referring now to Fig. 16 there is shown a plate 134 having a cross shaped aperture 136 received therein. The aperture 136 is capable of diverting various directions of fluid flow much like a circular aperture but with the capability of retaining various fluid accumulations along the corners thereof. Finally, addressing Fig. 17 there is shown a plate section 138 having a tabbed aperture 140 comprised of a plurality of flanged regions 141 folded outwardly of the tabbed 140 for substantially diverting and preventing the transfer of liquid therethrough but permitting the passage of vapor. Such an aperture may be advantageous for certain vapor liquid and/or mass heat exchange characteristics desired for certain chemical reactions in a process column.

Referring now to Fig. 18 there is shown a top plan view of a material blank comprised of slit construction. The slitted construction includes a plurality of slits formed in parallel spaced relationship and staggered one to the other along a longitudinal direction for affording a laminar fluid flow when disposed in a vertical configuration. The plate 150 of Fig. 18 includes slits 152 formed in rows 154 which are generally in parallel spaced relationship and which may be expanded through stretching in the direction of arrow 156. The material may also be provided in a slit or slotted configuration for use as a lamella 18 to be disposed within the notional plane between adjacent and corrugated plates 14. Likewise the configuration shown in Fig. 18 may be used in the embodiment shown therein as a plate construction for the corrugated assembly of plate 14. The slits or slots 152 formed therein may be seen to provide various advantageous capillary effects and lateral entrainment of the liquid descending thereacross for purposes of vapor liquid interface reaction.

Referring now to Fig. 19 the material blank of Fig. 18 is shown in a crimped and/or corrugated configuration. The slits 152 of the corrugated plate 160 shown in Fig. 19 includes a plurality of corrugations of 162 capable of diverting fluid flow or the construction of expanded corrugated plates by vertical expansion in the direction of arrow 164. It is conventional in the prior art to expand metal by first slitting and/or slotting said metal forming and/or coining and expanding said metal. Various steps in the coining, expanding, slitting and slotting processing steps may be altered for a particular flow configuration. As set forth above, the particular twisted and turned land configuration resulting from slitting and slotting has various advantages heretofore unavailable in prior art configurations for vapor liquid contact towers.

Referring again to Fig. 4, the process column 30 is shown with a plurality of grid layers 32 having the angulated corrugated plates 14 disposed therein with rectangular apertures 119 shown through said corrugated plates for purposes of illustration. The flow characteristics and chemical reactions concommitedly provided by the shape of these apertures may be shown to enhance the specific vapor liquid contact parameters necessary for select chemical reactions. Likewise, the orientation of the tabular aperture configurations shown in Figs. 9 through 17 have been shown to be particularly useful in "tuning" a process tower corrugated plate and/or lamella configuration for specific vapor liquid contact operation. By utilizing these parameters the process tower of the prior art may be utilized in an enhanced and much efficient configuration whereby specific flow configurations and turbulence levels may be interfaced with known laminar boundary characteristics for a particular grid array. With such flow characteristics and the developed parameters for the various tabular orientations relative to the corrugated expanded metal and/or plate materials incorporated into process tower, numerous advantages may be experienced with regard to operational environments.

## Claims

1. A tower packing comprising a plurality of corrugated metal sheets (14,150) in face-to-face relationship with opposed corrugations (17) angled oppositely one to the other and arranged for receiving a descending liquid flow concomitantly with an ascending vapour flow to bring about vapour-liquid contact therebetween for mass and/or heat transfer, said sheets having a plurality of relatively large spaced apart apertures (22) formed therein for effecting the flow of vapour and liquid therealong CHARACTERISED IN THAT
the sheets (150) include a plurality of spaced apart elongate slits (152) said slits being spaced longitudinally from one another in parallel rows (154) with the longitudinal axes of said slits extending transversely across said corrugations to distribute liquid across both sides of said sheets and provide lateral diversion and entrainment of liquid descending over said sheets to spread the liquid across the surface area of said sheets and produce enhanced vapour-liquid contact; no claim is made to tower packing as aforesaid wherein the sheets are of expanded metal.

2. A tower packing according to Claim 1 CHARACTERISED IN THAT the slits (152) in adjacent rows are longitudinally offset from one another into alignment with the spaces between the slits.

3. A tower packing according to Claim 1 or Claim 2 CHARACTERISED IN THAT each of said elongate slits includes a coined portion protruding outwardly from the plane of the sheet and extending from the respective slit in the direction of the liquid flow along the sheets.

## Patentansprüche

1. Füllkörper, enthaltend mehrere gefaltete Bleche (14, 150), die direkt gegenüber von entgegengesetzten Faltungen (17) angeordnet sind, wobei sie in entgegengesetztem Winkel zueinander stehen und so angeordnet sind, daß sie einen abfließenden Flüssigkeitsstrom gleichzeitig mit einem aufsteigenden Dampfstrom aufnehmen, um für einen Massen- und/oder Wärmeübergang einen Dampf-Flüssigkeitskontakt zwischen ihnen zustande zu bringen, wobei jedes Blech mehrere relativ große, beabstandete Öffnungen (22) besitzt, die in ihm ausgebildet sind, um den Fluß von Dampf und Flüsigkeit an ihm entlang zu bewirken,
**dadurch gekennzeichnet, daß**
die Bleche (150) mehrere beabstandete längliche Schlitze (152) besitzen, wobei diese Schlitze in parallelen Reihen (154) in Längsrichtung voneinander beabstandet sind und sich die Längsachsen der Schlitze quer über die Faltungen erstrecken, um die Flüssigkeit über beide Seiten der Bleche zu verteilen und für eine seitliche Verteilung ein Mitreißen der Flüssigkeit, die über das Blech hinunterfließt, zu sorgen, um die Flüssigkeit über die Oberfläche der Bleche zu verteilen und einen verbesserten Dampf-Flüssigkeitskontakt zu bewirken; es wird wie oben gesagt kein Anspruch auf einen Füllkörper erhoben, in dem die Bleche aus Streckmetall bestehen.

2. Füllkörper nach Anspruch 1,
**dadurch gekennzeichnet, daß**
die Schlitze (152) in benachbarten Reihen in Längsrichtung gegeneinander versetzt sind, so daß sie sich auf gleicher Höhe mit den Abständen zwischen den Schlitzen befinden.

3. Füllkörper nach Anspruch 1 oder Anspruch 2,
**dadurch gekennzeichnet, daß**
jeder längliche Schlitz einen ausgeprägten Bereich besitzt, der von der Ebene des Bleches vorsteht und sich von dem jeweiligen Schlitz in die Richtung des Flüssigkeitsflusses entlang der Bleche erstreckt.

## Revendications

1. Garnissage de tour comprenant plusieurs plaques métalliques ondulées (14, 150) qui sont placées face contre face, avec des ondulations en vis-à-vis (17) formées en angles de sens opposés, d'une plaque à la suivante, et qui sont agencées pour recevoir un courant descendant de liquide en même temps qu'un courant ascendant de vapeur afin de provoquer un contact vapeur-liquide entre eux, en vue d'un transfert de masse et/ou de chaleur, lesdites plaques présentant plusieurs ouvertures (22) relativement grandes et espacées l'une de l'autre, pratiquées en elles, pour assurer la circulation de vapeur et de liquide le long des plaques, caractérisé en ce que les plaques (150) comportent plusieurs fentes allongées (152) espacées l'une de l'autre, lesdites fentes étant disposées à distance l'une de l'autre en direction longitudinale, selon des rangées parallèles (154), les axes longitudinaux desdites fentes s'étendant transversalement auxdites ondulations, pour répartir le liquide sur l'étendue des deux faces desdites plaques et assurer une déviation et un entraînement latéraux du liquide descendant par-dessus lesdites plaques, pour répandre le liquide sur l'étendue de la surface desdites plaques et produire un contact vapeur-liquide renforcé; aucune revendication n'est faite sur un garnissage de tour, tel que précité, dans lequel les plaques sont en métal expansé.

2. Garnissage de tour selon la revendication 1, caractérisé en ce que les fentes (152) se trouvant dans des rangées adjacentes, sont décalées l'une de l'autre en direction longitudinale, en alignement avec les espaces présents entre les fentes.

3. Garnissage de tour selon la revendication 1 ou la revendication 2, caractérisé en ce que chacune desdites fentes allongées comporte une partie frappée, saillant vers l'extérieur hors du plan de la plaque et s'étendant à partir de la fente respective, dans la direction de l'écoulement du liquide le long des plaques.
